# EUROPEAN PATENT SPECIFICATION

(11) **EP 3 044 188 B1**
(45) Date of publication and mention of the grant of the patent: **27.03.2019**
(21) Application number: 14761835.9
(22) Date of filing: 09.09.2014
(51) Int. Cl.: C05D 9/02, C05F 11/00

(54) **COPPER COMPLEXES OF A CHELATING AGENT AS A FERTILIZER**
VERWENDUNG VON KUPFERKOMPLEXE DES METHYLGLYCINDIACETATS (MGDA) UND DES GLUTAMINSÄUREDIACETATS (GLDA) ALS DÜNGEMITTEL
UTILISATION DES COMPLEXES DE CUIVRE DU MÉTHYLGLYCINE DIACETATE ET DE L'ACIDE GLUTAMIQUE DIACETATE EN TANT QUE FERTILISANT

(30) Priority: 12.09.2013 EP 13184126
(43) Date of publication of application: 20.07.2016
(73) Proprietor: Akzo Nobel Chemicals International B.V., 6824 BM Arnhem (NL)
(72) Inventor: REICHWEIN, Adrianus Maria, NL-6883 EK Velp (NL); BUGTER, Marcel Hendrikus Joseph, NL-6721 GM Bennekom (NL)
(74) Representative: Akzo Nobel Chemicals IP Group
(86) International application number: PCT/EP2014/069122
(87) International publication number: WO 2015/036375

(56) References cited:
- WO-A1-2013/000848
- US-A1- 2013 000 370
- US-A1- 2013 012 383

## Description

The present invention relates to a process to fertilize plants by applying a fertilizer composition to the organic medium in which plants grow, the fertilizer composition containing a complex of copper and a chelating agent.

Many documents, such as for example WO2007006521, disclose nutritional mixtures for plants containing a chelating agent and an essential element, wherein the essential element may be copper.

However, there is a continued need for further improved fertilizer compositions in which copper is readily available to the plants and does not end up in the environment.

It has now been found that using the complex of GLDA or MGDA and copper for fertilization of plants that grow on an organic medium, especially plants that grow on peat soils, is particularly advantageous. Surprisingly, it was found that these complexes of GLDA and MGDA are not readily biodegradable, which is advantageous as the chelating agent should not be (bio)degraded before it has done its job of delivering the trace metal to the plant. After the metal chelate has provided the copper micronutrient to the growing plant, the empty chelating agent is readily biodegradable and will not cause any environmental concern. Furthermore, these complexes absorb to the organic medium well enough to not be washed out before they can deliver their copper cation to the same plants.

JP11029415 discloses plant growing agents containing a chelating agent with a transition metal. MGDA and GLDA are disclosed. The examples disclose salts/complexes of EDDS, ASDA, and MGDA with Mg, Mn, Ca, and B which are added to the soil and found to be substantially biodegradable. However, copper complexes of MGDA and GLDA and the use thereof in fertilizer compositions such as for peat soil applications, for instance for fertilizing pot or container grown crops or plants, are not disclosed and neither is the biodegradability difference between the copper complex and the empty chelating agent acknowledged.

US2011306495 discloses a herbicide composition containing a chelating agent such as GLDA or MGDA. The chelating agent is stated to be biodegradable and present as the transition metal complex. In the Examples the iron complexes are used. It is said that the herbicide composition needs to be applied such that it remains on the weed leaves. In one embodiment it is suggested to add a fertilizer to the product to help the desired plants to outgrow the undesired weeds. However, US2011306495 does not disclose the use of copper complexes of MGDA and/or GLDA to fertilize plants via the organic medium in which they grow.

WO 2013/00844 discloses the use of MGDA or GLDA in a micronutrient composition; however, this document neither clearly and unambiguously discloses a process to fertilize growing substances with a copper complex of MGDA or GLDA wherein the complex is applied to the medium in which the substances grow, nor does it acknowledge the advantageous biodegradability profile and absorption profile as further discussed below. In addition, this same document discloses the use of micronutrient compositions to fertilize plants that grow in soils or grounds but does not offer any disclosure or suggestion that these soils or grounds contain or should contain a certain percentage of organic matter.

US2013/012383 and US2013/000370 disclose the use of copper complexes of methylglycine N,N-diacetic acid (MGDA) and glutamic acid N,N-diacetic acid (GLDA) in micronutrient compositions, but no reference is done to the percentage of organic matter.

The present invention now provides a process to fertilize plants by applying a fertilizer composition to the organic medium in which the plants grow, the fertilizer composition containing a complex of metal cation and a chelating agent, wherein the chelating agent is methylglycine N,N-diacetic acid (MGDA) and/or glutamic acid N,N-diacetic acid (GLDA) and the metal cation is copper, and wherein the organic medium is a soil or a medium that contains at least 10 wt% organic matter on total weight of the organic medium as determined in accordance with NEN-EN 13039:2011.

NEN-EN 13039:2011 is the European Standard "Soil improvers and growing media - Determination of organic matter content and ash", published in November 2011 and accepted as the Dutch standard (Nederlandse Norm).

The organic medium in a preferred embodiment contains at least 15 wt% of organic matter, more preferably at least 20 wt%, most preferably at least 25 wt%, up to 100 wt%. The organic medium in embodiments may be peat, compost, or coir, such as used for pot and container grown crops or plants.

The invention in addition provides the use of a copper complex of MGDA or a copper complex of GLDA as a fertilizer for plants that grow in an organic medium, wherein the organic medium is a soil or a medium that contains at least 10 wt% organic matter on total weight of the organic medium as determined in accordance with NEN-EN 13039:2011.

It should be noted that only a very small percentage of the natural soils and grounds contain organic matter in an amount of more than 10 wt%, as can be found in the report by R Hiederer and M Köchy, "Global Soil Organic Carbon Estimates and the Harmonized World Soil Database", JRC Scientific and technical Reports, EUR 25225 EN - 2011, retrievable on http://eusoils.jrc.ec.europa.eu/ESDB Archive/eusoils docs/Other/EUR25225.pdf. As this report specifies, less than 1% of all soils have an organic matter content of more than 6 wt% and around 85% of all soils have an organic matter content of less than 2 wt%.

It should additionally be noted that the biodegradability of several metal complexes has been described also for the chelating agent EDDS (ethylenediamine disuccinic acid). P.C Vandevivere et al. in "Biodegradation of metal -[S,S]-EDDS Complexes" in Environm Sci Technol. 2001, 35, 1765-1770 describe that the nickel, copper, cobalt, and mercury complexes of EDDS are not biodegradable. It was surprising therefore that for GLDA and MGDA only the copper and nickel complexes lack biodegradability. In addition, the above document does not acknowledge that the lacking biodegradability is an advantage when using the copper metal complexes of MGDA and GLDA in which the copper is more readily available for plants than in a stronger corresponding EDDS complex to fertilize plants.

Compared to the use of CuSO4, the use of Cu-GLDA and Cu-MGDA provides better availability of the micronutrient to the growing plant, because the chelating agent prevents the strong adsorption of copper ions to the soil. Compared to the use of Cu-EDTA, the use of Cu-GLDA and Cu-MGDA provides improved biodegradation of the chelating agent after the metal chelate has performed its function.

In addition, the complex of copper with MGDA and GLDA as used in the process of the present invention is neither so strong as to make the micronutrient component unavailable to the plant, nor so weakly adsorbed to the organic medium that, like the copper complex of other biodegradable chelating agents (most notably EDDS), it is washed out of the organic medium.

The fertilizer compositions in some embodiments may contain an additional compound from the group of phosphorus-containing ingredients, nitrogen-containing ingredients, and potassium-containing ingredients. These are also called NPKs and are important for plant growth. Examples of NPKs are further phosphates, such as monoammonium phosphate, monopotassium phosphate, dipotassium phosphate, diammonium phosphate, polyphosphates, nitrates like calcium nitrate or potassium nitrate, or nitric acid, ammonium salts, such as ammonium nitrate or ammonium sulfate, urea, and potassium salts such as potassium nitrate, potassium chloride or potassium sulfate.

Preferably, the fertilizer composition contains up to 55 wt% (expressed as P2O5) of the phosphorus-containing component, an amount of up to 20 wt% (expressed as N) of the nitrogen-containing component, and/or an amount of between 2 and 20 wt% (expressed as K2O) of the potassium-containing component, all wt% being based on the total solids content of the composition. More preferably, the amount of phosphorus-containing compound is between 0 and 20 wt%, the amount of nitrogen-containing compound is between 0 and 15 wt%, and/or the amount of potassium-containing compound is between 2 and 15 wt%.

In further embodiments, the fertilizer composition of the invention may contain one or more further ingredients from the group of boric acid, borates, metal sulfates, ammonium molybdate, sodium molybdate, anti-caking agents, dyes, stabilizers, surfactants, flame retardants, bactericides, fungicides, biocides, biostimulants, insecticides, herbicides, antifoaming agents, and wetting agents. In a more preferred embodiment, the fertilizer composition contains boric acid and/or one or more borates, even more preferably, the composition contains between 20 and 50 wt% of such boron-containing compounds on the total solids content.

In a preferred embodiment of the process of the invention, the fertilizer composition can be applied to the organic medium in the form of particles or an aqueous solution.

Particles can be of any shape or size and thus also include pellets, tablets, microgranules, granules, powder, grains, etcetera. In a preferred embodiment, granules have a diameter of up to 1 cm, and tablets of up to 10 cm.

When the fertilizer composition is in the form of particles, the end user can dilute the particles with water to make the aqueous solution on site. The invention therefore also relates to a process wherein the fertilizer composition is first diluted with an aqueous liquid, after which it is applied to the organic medium. It further relates to a process wherein the fertilizer composition is first diluted with an aqueous liquid to make the aqueous solution with the desired concentration on site, as it should be noted that the end user oftentimes needs a solution only containing several grams of solid material per liter, while he wishes to store a more concentrated solution, after which the finally diluted formulation is applied to the organic medium.

Preferably, the chelating agent is GLDA.

The fertilizer composition of the present invention can be used for fertilizing trees or plants, which in some embodiments are palms, such as oil palms, coffee, tea, cacao, rubber, eucalyptus, tobacco, peanut, fruits like mango and avocado, and vegetables like table beets, carrots, kale, onion, and watermelon.

The fertilizer composition preferably contains 0.05 to 17 wt% of the metal cation complex based on the total solids content in the composition, more preferably 0.5 to 2.5 wt%.

The compositions of the invention can be applied by several methods, such as adding the particles or the aqueous solution to the organic medium, preferably via a concentrated fertilizer solution tank, and later when diluted to form a nutrient solution, to a (drip) irrigation system.

### Examples

### Example 1

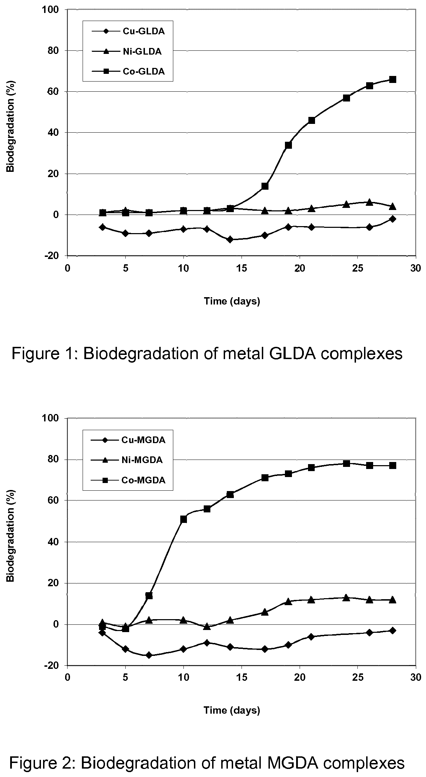

Biodegradation tests were performed according to the OECD Test Guidelines (OECD Guidelines for the Testing of Chemicals: Degradation and Accumulation, No. 301D: Ready Biodegradability (1992) Paris Cedex France) using inoculum from the river Rhine. The metal chelate complexes were prepared by mixing equimolar amounts of the MGDA-Na3 salt (Trilon® M Granules, 78% as MGDA-Na3, ex BASF) or GLDA-Na4 salt (Dissolvine® GL-PD-S, 83% as GLDA-Na4, ex AkzoNobel) with reagent grade metal salts CuCl2.2H2O, NiSO4.6H2O or CoCl2.6H2O. The biodegradation of the metal complexes was tested at a concentration of 5.0 or 6.0 mg/L.
The results are shown in Figures 1 and 2 below.

### Example 2

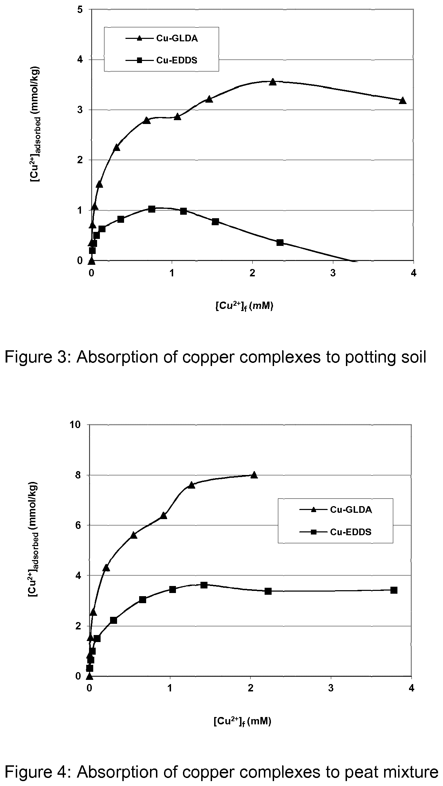

The organic media, unfertilized coir based potting soil for pot roses and unfertilized peat mixture, were obtained from MeeGaa Substrates B.V. (The Netherlands). The organic media were air-dried at 35°C and homogenized by passing them through a 2 mm sieve. After this pretreatment, the moisture content (1 hour at 105°C) of the potting soil was 20% and of the peat mixture 11%. The organic matter content of the oven-dried organic media according to NEN-EN 13039:2011 was 75% for the potting soil and 95% for the peat mixture.
The Cu-GLDA and Cu-EDDS complexes were prepared by mixing equimolar amounts of the GLDA-Na4 salt (Dissolvine® GL-47-S, 47% as GLDA-Na4, AkzoNobel) or EDDS-Na3 salt (35% as EDDS-Na3, Sigma-Aldrich 92698) with reagent grade CuSO4.5H2O.
Samples of the air-dried substrates (2.0 g) were equilibrated with solutions (40 g) containing different concentrations of either Cu-GLDA or Cu-EDDS in 0.01 M CaCl₂ solution. After being shaken for 24 hours at 25°C, the samples were centrifuged, filtered (Aquatron 30/0.45), and acidified with nitric acid. The Cu and Zn concentrations were determined by ICP-ES. In the graphs, the amount of Cu²⁺ that was adsorbed to the substrate ([CU²⁺]_{adsorbed}) is given as a function of the soluble Cu²⁺ concentration ([Cu²⁺]_{f}).
The results are shown in Figures 3 and 4 below.

From the results in Figures 1 and 2 it can be concluded that both Cu-GLDA and Cu-MGDA are not readily biodegradable (< 60% biodegradation in 28 days). In fact, no biodegradation at all is observed in 28 days. On the other hand, it is well known that the two chelating agents GLDA and MGDA themselves are readily biodegradable.

From the results in Figures 3 and 4 it can be concluded that Cu-GLDA is adsorbed more strongly by both organic media than Cu-EDDS, preventing it from being leached from the organic soil after watering the plants or (heavy) rain fall.

## Claims

1. Process to fertilize a plant by applying a fertilizer composition to the organic medium in which plants grow, the fertilizer composition containing a complex of metal cation and a chelating agent, wherein the chelating agent is methylglycine N,N-diacetic acid (MGDA) and/or glutamic acid N,N-diacetic acid (GLDA) and the metal cation is copper, and wherein the organic medium is a soil or a medium that contains at least 10 wt% organic matter on total weight of the organic medium as determined in accordance with NEN-EN 13039:2011.

2. Process of claim 1 wherein the plant is a tree, palm, like oil palm, coffee, tea, cacao, rubber, eucalyptus, tobacco, peanut, fruits like mango and avocado, vegetables like table beets, carrots, kale, onion or watermelon.

3. Process of claim 1 or 2 wherein the chelating agent is GLDA.

4. Process of any one of claims 1 to 3 wherein the fertilizer composition is in the form of particles or an aqueous solution.

5. Process of any one of claims 1 to 4 wherein the fertilizer composition contains 0.05 to 17 wt% of copper based on the total solids content in the composition.

6. Process of any one of claims 1 to 5 wherein the fertilizer composition in addition contains a nitrogen-containing compound, a potassium-containing compound or a phosphorus-containing compound.

7. Process of any one of claims 1 to 6 wherein the fertilizer composition in addition contains boric acid and/or one or more borate salts.

8. Use of a copper complex of MGDA or a copper complex of GLDA as a fertilizer for plants that grow in an organic medium wherein the organic medium is a soil or a medium that contains at least 10 wt% organic matter on total weight of the organic medium as determined in accordance with NEN-EN 13039:2011.

## Patentansprüche

1. Verfahren zum Düngen einer Pflanze durch Anwenden einer Düngemittelzusammensetzung auf das organische Medium, in dem die Pflanzen wachsen, wobei die Düngemittelzusammensetzung einen Komplex aus Metallkation und einem Chelatbildner enthält, wobei der Chelatbildner Methylglycin-N,N-Diessigsäure (MGDA) und/oder Glutaminsäure-N,N-Diessigsäure (GLDA) ist und das Metallkation Kupfer ist, und wobei das organische Medium Erde oder ein Medium ist, das wenigstens 10 Gew.% organische Stoffe, basierend auf dem Gesamtgewicht des organischen Mediums, enthält, wie nach NEN-EN 13039:2011 bestimmt.

2. Verfahren nach Anspruch 1, wobei die Pflanze ein Baum, eine Palme, wie eine Ölpalme, Kaffee, Tee, Kakao, Kautschuk, Eukalyptus, Tabak, Erdnuss, Früchte wie Mango und Avocado, Gemüse wie Tafelrüben, Karotten, Grünkohl, Zwiebeln oder Wassermelone ist.

3. Verfahren nach Anspruch 1 oder 2, wobei der Chelatbildner GLDA ist.

4. Verfahren nach einem der Ansprüche 1 bis 3, wobei die Düngemittelzusammensetzung die Form von Partikeln hat oder eine wässrige Lösung ist.

5. Verfahren nach einem der Ansprüche 1 bis 4, wobei die Düngemittelzusammensetzung 0,05 bis 17 Gew.% Kupfer, basierend auf dem Gesamtfeststoffgehalt in der Zusammensetzung, enthält.

6. Verfahren nach einem der Ansprüche 1 bis 5, wobei die Düngemittelzusammensetzung zusätzlich eine stickstoffhaltige Verbindung, eine kaliumhaltige Verbindung oder eine phosphorhaltige Verbindung enthält.

7. Verfahren nach einem der Ansprüche 1 bis 6, wobei die Düngemittelzusammensetzung zusätzlich Borsäure und/oder ein oder mehrere Boratsalze enthält.

8. Verwendung eines Kupferkomplexes aus MGDA oder eines Kupferkomplexes aus GLDA als Düngemittel für Pflanzen, die in einem organischen Medium wachsen, wobei das organische Medium Erde oder ein Medium ist, das wenigstens 10 Gew.% organische Stoffe, basierend auf dem Gesamtgewicht des organischen Mediums, enthält, wie nach NEN-EN 13039:2011 bestimmt.

## Revendications

1. Procédé pour fertiliser une plante en appliquant une composition d'engrais au milieu organique dans lequel les plantes poussent, la composition d'engrais contenant un complexe de cation métallique et d'un agent chélatant, où l'agent chélatant est l'acide méthylglycine N,N-diacétique (MGDA) et/ou l'acide glutamique-N,N-diacétique (GLDA) et le cation métallique est le cuivre, et où le milieu organique est un sol ou un milieu qui contient au moins 10% en poids de matière organique par rapport au poids total du milieu organique tel que déterminé selon la norme NEN-EN 1303:2011.

2. Procédé de la revendication 1, dans lequel la plante est un arbre, un palmier, comme le palmier à huile, le café, le thé, le cacao, le caoutchouc, l'eucalyptus, le tabac, l'arachide, des fruits comme la mangue et l'avocat, des légumes comme la betterave, la carotte, le chou frisé, l'oignon ou la pastèque.

3. Procédé de la revendication 1 ou 2, dans lequel l'agent chélatant est le GLDA.

4. Procédé de l'une quelconque des revendications 1 à 3, dans lequel la composition d'engrais est sous la forme de particules ou d'une solution aqueuse.

5. Procédé de l'une quelconque des revendications 1 à 4, dans lequel la composition d'engrais contient de 0,05 à 17% en poids de cuivre par rapport à la teneur totale en matières solides dans la composition.

6. Procédé de l'une quelconque des revendications 1 à 5, dans lequel la composition d'engrais contient en outre un composé contenant de l'azote, un composé contenant du potassium ou un composé contenant du phosphore.

7. Procédé de l'une quelconque des revendications 1 à 6, dans lequel la composition d'engrais contient en outre de l'acide borique et/ou un ou plusieurs sel(s) de borate.

8. Utilisation d'un complexe de cuivre de MGDA ou d'un complexe de cuivre de GLDA en tant qu'engrais pour les plantes qui poussent dans un milieu organique où le milieu organique est un sol ou un milieu qui contient au moins 10% en poids de matière organique par rapport au poids total du milieu organique tel que déterminé selon la norme NEN-EN 13039:2011.
